# EUROPÄISCHE PATENTSCHRIFT

(11) **EP 0 955 472 B1**
(45) Veröffentlichungstag und Bekanntmachung des Hinweises auf die Patenterteilung: **30.06.2004**
(21) Anmeldenummer: 99107469.1
(22) Anmeldetag: 29.04.1999
(51) Int. Cl.: F15B 11/028, G05D 16/10

(54) **Sitzventil**
Seat valve
Soupape à siège

(30) Priorität: 07.05.1998 DE 29808295 U
(43) Veröffentlichungstag der Anmeldung: 10.11.1999
(73) Patentinhaber: HAWE Hydraulik GmbH & Co. KG, 81673 München (DE)
(72) Erfinder: Neumair, Georg, Dipl.-Ing.(FH), 85402 Thalhausen (DE)
(74) Vertreter: Grünecker, Kinkeldey, Stockmair & Schwanhäusser Anwaltssozietät

(56) Entgegenhaltungen:
- WO-A-87/01171
- DE-A- 3 204 055
- DE-A- 4 108 080
- DE-A- 4 237 901
- DE-U- 29 615 498
- PATENT ABSTRACTS OF JAPAN vol. 012, no. 327 (P-753), 6. September 1988 (1988-09-06) & JP 63 089908 A (MIYACHI ELECTRIC), 20. April 1988 (1988-04-20)

## Beschreibung

Die Erfindung betrifft ein Sitzventil der im Oberbegriff des Anspruchs 1 angegebenen Art.

Solche Druckregel- oder Druckminderventile gemäß DE-U-296 15 498 ermöglichen eine feinfühlige Druckregelung unabhängig von Druckschwankungen des ungeregelten Drucks, weil der das Schließglied relativ zum Ventilsitz einstellende Steuerkolben nur vom geregelten Druck gegen die Regelkraft verstellt wird, die den Wert des zu regelnden Drucks bestimmt. Die Regelkraft kann z.B. erzeugt werden durch eine Regelfeder, deren Vorspannung zur Veränderung des geregelten Drucks geändert wird, oder durch einen Proportionalmagneten, der als magnetische Feder wirkt und seine jeweilige Kraft in Abhängigkeit von der Bestromung erzeugt. Solche Sitzventile werden in der Hochdruckhydraulik verwendet, wenn neben der Druckregelung die Forderung einer leckagefreien Absperrfunktion zu erfüllen ist, weil Sitzventile im Gegensatz zu Schieberventilen in der Absperrstellung zuverlässig leckagefrei dicht sind. Allerdings erreicht der Regelkolben wegen der vorgesehenen Bewegungsdämpfung seine eigentlich mit dem eingestellten Wert des geregelten Drucks korrespondierende Position bei Bewegungen des Ventilglieds verzögert, so dass die Ist-Position des Regelkolbens nicht stets mit dem Ist-Wert des geregelten Drucks korrespondiert. Eine Überwachung des geregelten Druckes, wie sie in verschiedenen Anwendungsfällen gebraucht wird, ließe sich zwar beispielsweise realisieren mittels eines dem geregelten Druck ausgesetzten Druckschalters, dessen Schaltpunkt auf den geregelten Druck eingestellt ist. Da eine Verstellung der Regelkraft den Wert des geregelten Drucks ändert, müsste dann auch der Druckschalter nachgestellt werden.

Bei einem aus JP 61 23 5154/93089908 bekannten Druckluft-Druckreduzierventil wird die druckabhängige Öffnungsbewegung des kolbenartigen Ventilschließgliedes relativ zu seinem Ventilsitz durch eine Membrane gesteuert, die in Öffnungsrichtung des Ventils durch eine verstellbare Regelfeder und in Schließrichtung vom geregelten.

Druck beaufschlagt wird. Bewegungen der Membrane werden von einem mit dem Ventilschließglied gekoppelten Stab auf das Ventilschließglied übertragen. Das obere Ende des Stabes arbeitet mit einer in der Membrane vorgesehenen Ablassöffnung als Ablassventil zusammen, das bei einer unzulässigen Erhöhung des geregelten Drucks von der Membrane geöffnet wird und den geregelten Druck wieder auf den durch die Regelfeder eingestellten Wert bringt. Das untere Ende des Stabs arbeitet berührungslos mit einem Schalter zusammen (Näherungsdetektor). Es wird ein Signal erzeugt, das bestätigt, wenn der geregelte pneumatische Druck den eingestellten Wert erreicht hat. Da der den Schalter betätigende Stab mit dem Ventilschließglied gekoppelt ist, das den geregelten Druck einstellt, kann der Schaltpunkt des Schalters Fluktuationen unterworfen sein.

Aus DE 42 37 901 ist ein Druckminderventil mit integriertem Druckschalter bekannt. Es enthält das Druckminderventil einen Regelkolben, der schieberartig die Druckregelung durchführt. Bei einem schieberartig arbeitenden Regelkolben ohne Sitzventilfunktion ist im Betrieb, und in der Absperrstellung, insbesondere bei hohen Systemdrücken, Leckage, z.B. zum Rücklauf, nicht zu vermeiden, so dass derartige Druckminderventile nicht brauchbar sind, wenn es auf eine leckagefreie Absperrstellung ankommt.

In einem aus DE-A-32 04 055 bekannten, vorgesteuerten Druckminderventil enthält das Vorsteuerventil einen mit Leckage arbeitenden Blendenkolben, der bei einem Notfall (Federbruch, Ausfall des Magneten) als Sitzventilelement arbeitet und darüber hinaus hubabhängig einen elektrischen Schalter betätigt.

Weiterer Stand der Technik ist enthalten in WO 87/01171 und DE-A-41 08 080.

Der Erfindung liegt die Aufgabe zugrunde, ein Sitzventil der eingangs genannten Art zu schaffen, das auf baulich einfache Weise eine zuverlässige und über den Einstellbereich des Sitzventils nachstellfreie Drucküberwachung ermöglicht.

Die gestellte Aufgabe wird mit den Merkmalen des Anspruchs 1 gelöst.

Zur Drucküberwachung wird bei dem Sitzventil mit dem vom geregelten Druck gegen die Regelkraft direkt beaufschlagten Steuerkolben die Tatsache genutzt, dass die Position des Steuerkolbens bei Erreichen des eingestellten Werts des geregelten Drucks unabhängig vom eingestellten Wert der Regelkraft ist, so dass der vom Steuerkolben betätigte Positionsmelder über den gesamten Einstellbereich eine gleichbleibend präzise Aussage zum geregelten Druck liefert, nämlich je nach Einstellung des Schaltpunktes des Positionsmelders, ob der eingestellte Wert des geregelten Drucks erreicht, überschritten oder unterschritten ist. Eine zuverlässige, nachstellfreie Drucküberwachung wird zusammen mit dem Vorteil der Leckagefreiheit der Sitzventilfunktion erzielt. Diese Kombination ist für viele Anwendungsfälle sehr zweckmäßig, bei denen die Leckagefreiheit und eine einfache und zuverlässige Drucküberwachung gebraucht werden. Es braucht zur Drucküberwachung nicht im Arbeitsströmungsweg eingegriffen oder die Position des Schließgliedes überwacht zu werden, sondern es wird zur Drucküberwachung an günstiger Stelle am Steuerkolben eingegriffen. Dabei sollte sichergestellt sein, dass der geregelte Druck stromab des Sitzventils nicht durch externe Einflüsse angehoben werden kann.

Baulich einfach wird bei einer Ausführungsform über den Steuerkolben ein elektrischer Schalter betätigt, der z.B. meldet, dass der geregelte Druck erreicht ist. Ein Mikroschalter hat den Vorteil eines sehr kleinen Betätigungsweges mit präzisem Schaltpunkt, der sich exakt auf den Wert des geregelten Drucks bzw. einem den geregelten Druck gleichbleibend proportionalen Druckwert einstellen lässt. Der Positionsmelder kann auch ein Näherungsschalter, ein Reed-Schalter oder ein kapazitiv arbeitender Schalter sein. Der Positionsmelder wird einfach im oder am Gehäuse in einer druckfreien Zone angeordnet, d.h. außerhalb des Strömungsweges, so dass keine aufwendigen Dichtmaßnahmen erforderlich sind und der Positionsmelder auch nicht druckfest zu sein braucht.

Bei einer weiteren Ausführungsform wird eine saubere Führung des Steuerkolbens erreicht mit dem Vorteil einer Referenzstellung an einem Endanschlag, und wird die Position bzw. der Hub des Steuerkolbens über die mechanische Kopplung zum Positionsmelder übertragen. Der Positionsmelder könnte auch direkt beim Steuerkolben angeordnet sein.

Zweckmäßig wird die Regelkraft von einem Proportionalmagneten erzeugt. Auch ein Piezo-Element oder ein Schrittmotor könnte verwendet werden.

Um bei der Übertragung der Regelkraft auf den Steuerkolben störende Kräfte zu vermeiden, kann der Steuerkolben über ein Widerlager von der Regelkraft beaufschlagt werden, das als Antriebselement der mechanischen Kopplung zum Positionsmelder dient. Dies ist herstellungstechnisch günstig, da u.a. der Steuerkolben keinerlei Modifikationen braucht. Ein kompakter Aufbau ergibt sich mit parallel zum Steuerkolben bewegungsgeführtem Stößel, der den Positionsmelder betätigt. Herstellungstechnisch zweckmäßig wird die Steuerkolbenbewegung über den Kupplungsteil und den Eingriffsteil auf den Stößel übertragen, und zwar in beiden Bewegungsrichtungen und im wesentlichen spielfrei.

Es kann der Stößel herstellungstechnisch einfach in einer Gehäusebohrung geführt sein, die zum Positionsmelder führt. Die Verstellbarkeit des Positionsmelders ermöglicht die präzise Einstellung des Schaltpunkts.

Bei einer weiteren, baulich vereinfachten Ausführungsform ist der Positionsmelder zusammen mit der Kopplung oben seitlich auf dem Gehäuse angeordnet, was die Montage des Sitzventils, z.B. bei einer Blockmontage, vereinfacht

Bei einer weiteren Ausführungsform wird das die Bewegung des Steuerkolbens zum Positionsmelder übertragende Widerlager gegen Verdrehung gesichert, und lässt sich der Schaltpunkt des Positionsmelders direkt am Stößel einstellen. Dies erhöht die Genauigkeit des Ansprechens des Positionsmelders und erleichtert dessen Montage.

Zweckmäßig wird der Schaltpunkt des Positionsmelders nicht exakt auf den eingestellten Wert des zu regelnden Drucks eingestellt, sondern beispielsweise auf einen darunterliegenden Wert. Eine beispielsweise eingestellte Differenz von ca. 10 Bar zwischen dem eingestellten Wert des geregelten Drucks und dem Schaltpunkt wird über den gesamten Einstellbereich des Sitzventils bzw. der Regelkraft aufrechtgehalten, so dass nach einer anfänglichen Justierung des Positionsmelders bei Änderung der Regelkraft keine Anpassung mehr erforderlich ist.

Anhand der Zeichnung werden Ausführungsformen des Erfindungs-Gegenstandes erläutert. Es zeigen:
- Fig. 1: einen Längsschnitt durch ein Sitzventil mit Drucküberwachung,
- Fig. 2: ein Blockschaltbild zu Fig. 1,
- Fig. 3: einen Teillängsschnitt einer Hydrauliksteuerung, in die ein Sitzventil mit Drucküberwachung eingegliedert ist,
- Fig. 4: ein Blockschaltbild passend zu Fig. 3, und
- Fig. 5: einen Längsschnitt einer weiteren Ausführungsform des Sitzventils.

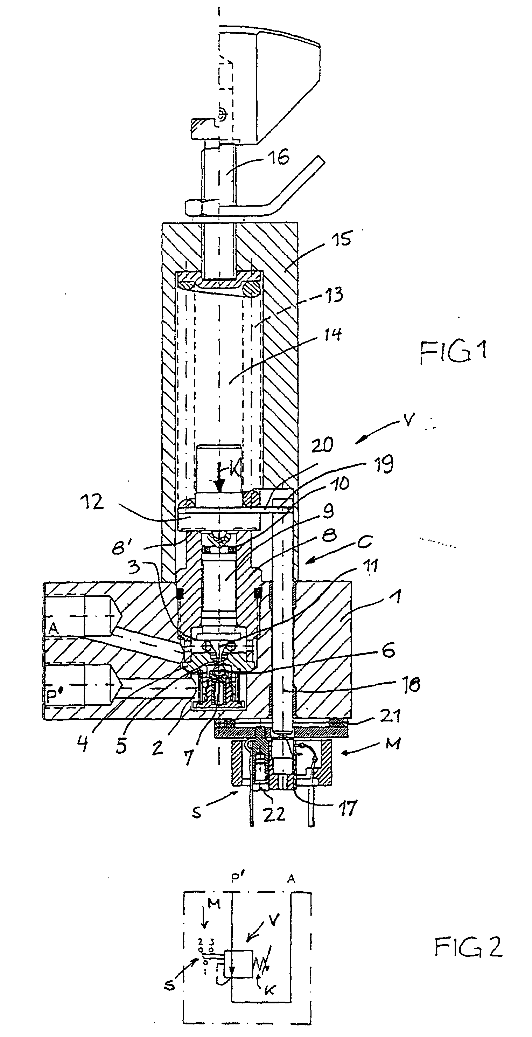

Ein Sitzventil V in den Fig. 1, 2 und 5 dient zum Regeln des abströmseitigen Druckes auf einen innerhalb eines Einstellbereiches änderbaren Druckwert mit der Maßgabe, dass der zulaufseitige, ungeregelte Druck, der variieren kann, mindestens dem geregelten Druck entspricht oder höher ist.

Das Sitzventil V weist in einem Gehäuse 1 eine erste Kammer 2 auf, die von einer zweiten Kammer 3 durch einen Ventilsitz 5 in einem Gehäuseeinsatz 4 getrennt ist. Die erste Kammer 2 ist mit einem Anschluss P für den ungeregelten Druck verbunden, während die zweite Kammer 3 mit einem Anschluss A für den geregelten Druck verbunden ist. In der ersten Kammer 2 ist dem Ventilsitz 5 ein Schließglied 6 zugeordnet, beispielsweise eine Kugel, das zwischen der gezeigten Öffnungsstellung und einer am Sitz 5 anliegenden Schließstellung auf- und abbewegbar ist, und zwar unter dem Einfluß einer Führungs- und Dämpfeinrichtung 7.

Von der Oberseite des Gehäuses 1 ist in die zweite Kammer 3 eine Hülse 8 eingesetzt, zweckmäßigerweise mit einer Dichtung eingeschraubt, die in einer Innenbohrung einen Steuerkolben 9 verschiebbar führt. Die Beaufschlagungsfläche des Steuerkolbens 9 ist größer als die Querschnittsfläche des Ventilsitzes 5. Der Steuerkolben 9 ist mit wenigstens einer Dichtung 10 abgedichtet und aus der gezeigten Endstellung für den maximalen Öffnungshub des Schließgliedes 6 durch den geregelten Druck in der zweiten Kammer 3 nach oben verschiebbar. Am unteren Ende des Steuerkolbens 9 ist ein Fortsatz 11 angeformt, der mit radialem Spiel durch den Ventilsitz 5 hindurch das Schließglied 6 beaufschlagt. Das obere Ende der Hülse 8 definiert einen Grenzanschlag 8' für die maximale Öffnungsstellung des Schließgliedes 6. Der Steuerkolben 9 ist mit einer nach unten gerichteten Regelkraft K beaufschlagt, die bei der bezeigten Ausführungsform durch wenigstens eine Regelfeder 13 erzeugt wird. Die Regelkraft K könnte jedoch auch durch einen Proportionalmagneten erzeugt werden. Die Regelkraft K wird durch ein Widerlager 12, z.B. ein Federwiderlager, auf den Steuerkolben 9 übertragen. Die Regelfeder 13 befindet sich in einem Raum 14 eines Gehäuseteils 15 und ist in ihrer Vorspannung durch ein Einstellelement 16 veränderbar, um die Regelkraft K und über diese den Wert des geregelten Drucks im Anschluß A zu ändern.

An der Unterseite des Gehäuses 1 ist ein Positionsmelder M montiert, beispielsweise ein elektrischer Schalter, vorzugsweise ein Mikroschalter S, der ein nach oben weisendes Betätigungselement 17 besitzt. Das Betätigungselement 17 ist auf eine Gehäusebohrung ausgerichtet, in der ein Stößel 18 einer mechanischen Kopplung C mit dem Steuerkolben 9 parallel zur Hubrichtung des Steuerkolbens 9 geführt ist. Der Stößel 18 ist mit dem Widerlager 12 über einen zwischen der Regelfeder 13 und dem Widerlager 12 eingeklemmten Kupplungsteil 20 gekuppelt, der in eine Eingriffsstelle 19, beispielsweise eine Ringnut, des Stößels 18 eingreift.

Der Schaltpunkt des Positionsmelders M bzw. des Schalters S wird auf den Wert des geregelten Drucks eingestellt oder auf einen geringfügig darunterliegenden Druckwert, und zwar entweder mittels einer Stellschraube 22 und/oder durch Unterlagteile 21 zwischen dem Gehäuse des Positionsmelders M und dem Gehäuse 1

Beispielsweise ist in der in Fig. 1 gezeigten, drucklosen Stellung das Betätigungselement 17 durch den Stößel 18 gedrückt. Der Positionsmelder M gibt in diesem Fall kein Signal ab. Bei steigendem ungeregeltem Druck in P steigt wegen des offenen Ventilsitzes 5 der Druck in der zweiten Kammer 3 und im Anschluß A und beaufschlagt den Steuerkolben 9, der beginnt, gegen die Regelkraft K nach oben zu fahren. Das Schließglied 6 folgt dieser Bewegung, bis es bei Erreichen des durch die Regelkraft K eingestellten Wertes des geregelten Drucks am Ventilsitz 5 anliegt und leckagefrei absperrt. Der Schaltpunkt des Positionsmelders M ist zweckmäßigerweise so eingestellt, daß der Positionsmelder ein Signal abgibt, wenn oder kurz bevor der Steuerkolben die Position erreicht hat, in der der eingestellte Wert des geregelten Drucks im Anschluß A vorliegt, d.h. beispielsweise bei einem Wert des zu regelnden Drucks von 100 Bar bereits bei 90 Bar. Sinkt später durch Verbrauch der geregelte Druck im Anschluß A ab, dann verringert sich die am Steuerkolben 9 nach oben wirkende Kraft entsprechend, bis die Regelkraft K über den Fortsatz 11 des Steuerkolbens 9 das Schließglied 6 gegen den ungeregelten Druck in P vom Ventilsitz 5 abhebt, um den Wert des geregelten Drucks wieder einzustellen. Sollte der geregelte Druck zu stark abfallen, dann spricht ggfs. der Positionsmelder M an und meldet einen unzulässigen Druckabfall.

Gemäß Fig. 2 wird das Sitzventil V mit dem Schalter S zur Drucküberwachung eingesetzt, d.h. zum Melden, ob der bei A eingestellte Druck erreicht, oder nicht erreicht ist, wobei der geregelte Druck bei A aus dem ungeregelten Druck P abgeleitet wird.

Das Sitzventil V ist in der Absperrstellung leckagefrei dicht, da weder aus den Kammern 2, 3 noch entlang des Steuerkolbens 9 Druckmittel verlorengeht. Tritt kein Verbrauch auf, dann wird der geregelte Druck auch über lange Stillstandszeiten gehalten.

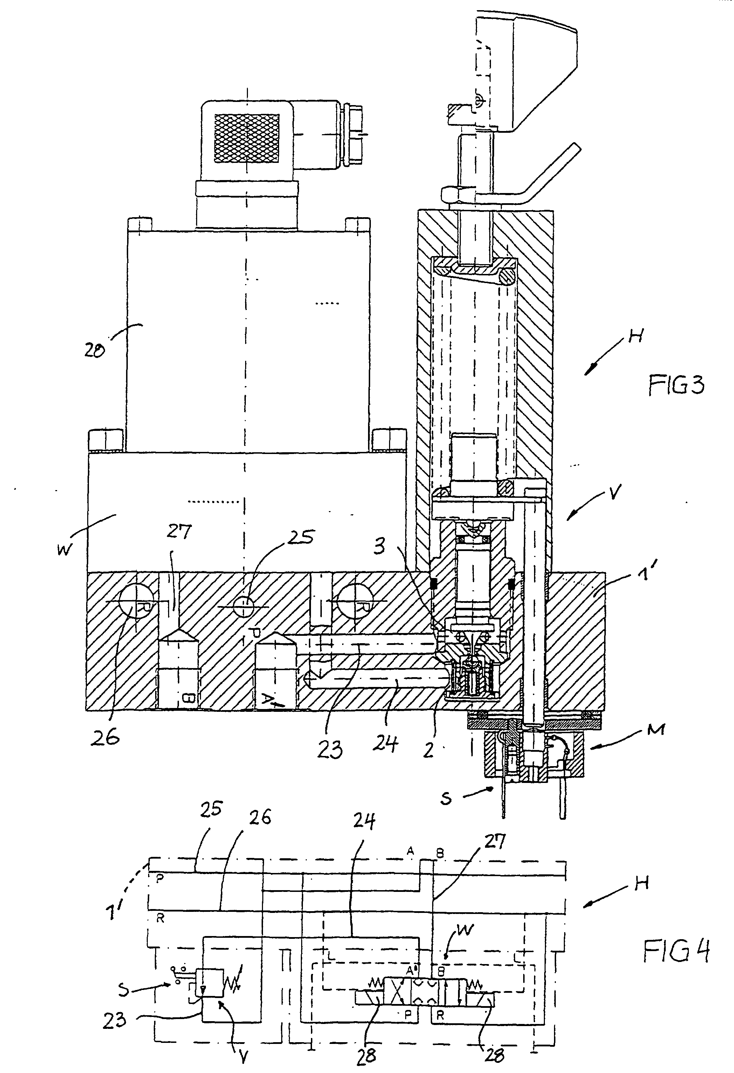

In den Fig. 3 und 4 ist das Sitzventil V mit der Drucküberwachung durch den Positionsmelder M bzw. dem Schalter S in eine hydraulische Steuervorrichtung H integriert. Gemäß Fig. 4 weist die hydraulische Steuervorrichtung H ein 4/3-Wegesteuerventil W in Sitzventilbauweise (in der Abschlußstellung leckagefrei dicht) auf, das mit einem Anschluß P an eine Druckleitung 25 und mit seinem Anschluß R an eine Rücklaufleitung 26 angeschlossen ist,und zum Richtungssteuem eines z.B. doppelseitig beaufschlagbaren Hydroverbrauchers (nicht gezeigt) über die Arbeitsleitungen 24, 27 dient. Die Arbeitsleitungen 24, 27 sind an die Anschlüsse A' B des Wegesteuerventils W angeschlossen. Dieses wird in seiner Mittelstellung (Absperrstellung) durch beiderseitige Federn zentriert und in die jeweilige Steuerstellung mittels eines von zwei Magneten 28 verstellt. In der einen Schaltstellung ist der Anschluß P mit dem Ausgang B verbunden und gleichzeitig der Ausgang A'mit dem Anschluß R verbunden, während in der anderen Schaltstellung der Anschluß P mit dem Ausgang A'und der Anschluß R mit dem Ausgang B verbunden ist. Über den Ausgang A'wird beispielsweise der Hydroverbraucher zum Ausfahren veranlaßt, während über den Ausgang B die Rückfahrbewegung gesteuert wird.

In der Arbeitsleitung 24 ist das Sitzventil V mit dem Positionsmelder M bzw. dem Schalter S angeordnet, um für den Hydroverbraucher einen bestimmten Druckwert entsprechend der Regelkraft K einzuregeln, und zwar aus dem ungeregelten Druck am Ausgang A' des Wegesteuerventils. Zu diesem Zweck sind eine Schleife 23 der Arbeitsleitung 24 und das Sitzventil V mit dem Positionsmelder M in einem Verteilerblock untergebracht, der mit dem Wegesteuerventil W auf übliche Weise in Sandwichbauweise verbunden ist. Der Verteilerblock bildet das Gehäuse 1' für das Sitzventil V und den Positionsmelder M.

Fig. 3 verdeutlicht die konstruktive Ausbildung der Steuervorrichtung H gemäß Fig. 4.

Das Wegesteuerventil W mit seinen Magneten 28 ist auf der Oberseite des Gehäuses 1' montiert, derart, daß seine Ausgänge A', B mit den Leitungen 27 und 24 im Gehäuse 1' fluchten, und seine Anschlüsse R, P, mit den Leitungen 25,26 in Verbindung sind. Die Leitung 27 führt im Gehäuse 1' zum Ausgang B. Die Leitung 24 führt im Gehäuse 1' in die erste Kammer 2 des Sitzventils V, während die zweite Kammer 3 des Sitzventils V mit der Leitungsschleife 23 verbunden ist.

Die Funktion entspricht der zu Fig. 1 beschriebenen. Sobald das Wegesteuerventil W in seine Schaltstellung geschaltet hat, in der sein Anschluß P mit dem Ausgang A' verbunden ist, herrscht in der ersten Kammer 2 der ungeregelte Druck. Das Sitzventil V stellt in der Leitungsschleife 23 den eingestellten Wert des geregelten Drucks her. Sobald dieser Wert in der zweiten Kammer 3 erreicht ist, oder bei einem geringfügig darunterliegenden Druckwert, spricht der Positionsmelder M bzw. der Schalter S an und gibt ein Gutsignal ab. Dieses Gutsignal liegt an, solange der geregelte Druck im Anschluß A vorliegt. Fällt der geregelte Druck im Anschluß A unterhalb des eingestellten Wertes bzw. unterhalb des gewählten darunterliegenden Wertes (dem Schaltpunkt des Positionsmelders), so bleibt das Gutsignal aus.

Die in den Fig. 3 und 4 gezeigte hydraulische Steuervorrichtung kann beispielsweise Teil einer elektrohydraulischen Spannvorrichtung einer Werkzeugmaschine sein, bei der der Spanndruck durch die Regelkraft K eingestellt und einer übergeordneten Steuereinheit über den Positionsmelder M bzw. den Schalter S gemeldet wird, ob der eingestellte Spanndruck erreicht ist, oder nicht. Wird der Spanndruck durch Ändern der Regelkraft geändert, dann braucht der Positionsmelder M bzw. der Schalter S nicht nachjustiert zu werden, weil die Änderung der Regelkraft keinen Einfluß auf die Position des Steuerkolbens bei Erreichen des eingestellten Werts des geregelten Drucks hat. In der Steuervorrichtung gemäß Fig. 4 könnte alternativ die andere Arbeitsleitung 27 durch das Sitzventil V überwacht werden, oder könnten beide Arbeitsleitungen 24, 27 jeweils durch ein solches Sitzventil überwacht werden, und zwar gegebenenfalls auf unterschiedliche Werte der geregelten Drücke.

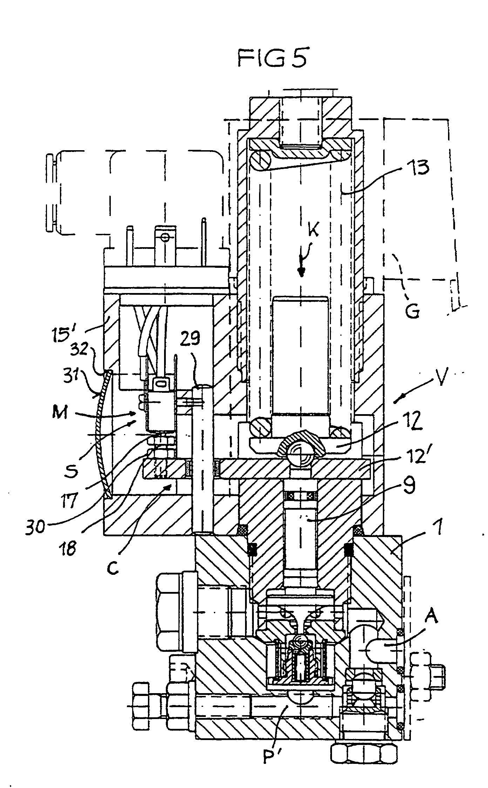

In Fig. 5 ist im Unterschied zum Fig. 1 der Positionsmelder M, z.B. ein elektrischer Mikroschalter S, seitlich neben der die Regelkraft K erzeugenden Regelfeder 13 in einem Hohlraum des Gehäuseteils 15' fest montiert. Die mechanische Kopplung C, gebildet durch das Widerlager 12' und den Stößel 18', greift vom Steuerkolben 9 seitlich nach außen und oben. Die Außen- und Unterseiten des Gehäuses 1 sind frei, was montagetechnische Vorrteile hat. Ein Stift 29 im Gehäuseteil 15' bildet eine Verdrehsicherung für das Widerlager 12'. Der Stößel 18' ist als Stellschraube 30 ausgebildet, um den Schaltpunkt des Positionsmelders M einstellen zu können. Zu diesem Zweck ist im Gehäuseteil 5' eine leicht entnehmbare Abdeckung 31 in einem Fenster 32 vorgesehen. Auch bei dieser Ausführungsform könnte anstelle der Regelfeder 13 ein Proportionalmagnet G (gestrichelt angedeutet) verwendet werden, um als magnetische Feder die in Abhängigkeit vom zugeführten Strom verstellbare Regelkraft K für den Steuerkolben 9 zu erzeugen. Die Funktion des Sitzventils V entspricht der oben erläuterten.

## Patentansprüche

1. Sitzventil (V) zum Regeln eines Drucks auf einen einstellbaren Wert, mit einem Gehäuse (1, 1'), einem Ventilsitz (5) zwischen einer mit ungeregeltem Druck beaufschlagten ersten Kammer (2) und einer mit dem geregelten Druck beaufschlagten zweiten Kammer (3), einem in der ersten Kammer (2) aus einer leckagefreien Schließstellung in Öffnungsrichtung relativ zu einem Ventilsitz (5) bewegbaren Schließglied (6), und mit einem in der zweiten Kammer (3) abgedichtet bewegbar angeordneten, gegen den geregelten Druck mit einer in Öffnungsrichtung des Schließgliedes (6) gerichteten, einstellbaren Regelkraft (K) beaufschlagten Steuerglied, das über ein Übertragungsglied (11) durch den Ventilsitz (5) hindurch am Schließglied (6) zum Angriff bringbar ist, und mit einem Positionsmelder (M), mit dem bei Erreichen zumindest einer vorbestimmten Proportion zwischen dem geregelten Druck und dem eingestellten Wert des geregelten Drucks an einem Schaltpunkt ein elektrisches Signal erzeugt wird, **dadurch gekennzeichnet, dass** das Steuerglied (1) in der zweiten Kammer (3) ein direkt vom geregelten Druck gegen die Regelkraft (K) verschiebbarer Steuerkolben (9) ist, dass der Steuerkolben (9) durch eine mechanische Kopplung (C) bewegungsübertragend mit dem Positionsmelder (M) verbunden ist, und dass der Schaltpunkt des Positionsmelders (M) auf die von der Regelkraft (K) unabhängige Position des Steuerkolbens (9) eingestellt ist, die der Steuerkolben (9) innerhalb des Einstellbereichs der Regelkraft (K) stets bei Erreichen der vorbestimmten Proportion einnimmt.

2. Sitzventil nach Anspruch 1, **dadurch gekennzeichnet, dass** der Positionsmelder (M) ein elektrischer Schalter (S), vorzugsweise ein Mikroschalter, ist.

3. Sitzventil nach Anspruch 1, **dadurch gekennzeichnet, dass** der Steuerkolben (9) in einer in die zweite Kammer (3) eingesetzten Hülse (8) angeordnet ist, die in einen druckentlasteten Raum (14) ragt, in dem die Regelkraft (K) den Steuerkolben (9) beaufschlagt.

4. Sitzventil nach Anspruch 1, **dadurch gekennzeichnet, dass** ein verstellbarer Proportionalmagnet (G) die Regelkraft (K) erzeugt.

5. Sitzventil nach Anspruch 1, **dadurch gekennzeichnet, dass** die Regelkraft (K) über ein Widerlager (12, 12') auf den Steuerkolben (9) übertragen wird, und dass die mechanische Kopplung (C) mit dem Widerlager (12, 12') bewegungsübertragend gekuppelt ist.

6. Sitzventil nach Anspruch 3, **dadurch gekennzeichnet, dass** die mechanische Kopplung (C) einen parallel zum Steuerkolben (9) verschiebbaren Stößel (18, 18') aufweist, der auf ein Betätigungselement (17) des Positionsmelders (M) ausgerichtet ist, und dass der Stößel (18) einen Eingriffsteil (19) aufweist, in den ein seitlicher Kupplungsteil (20) des Widerlagers (12) eingreift.

7. Sitzventil nach Anspruch 1, **dadurch gekennzeichnet, dass** der Positionsmelder (M) verstellbar an einer Gehäuseaußenseite montiert ist.

8. Sitzventil nach Anspruch 1, **dadurch gekennzeichnet, dass** der Positionsmelder (M) und die Kopplung (C) in einem auf dem Gehäuse (1) oben angebrachten Gehäuseteil (15') montiert sind, und dass ein mit dem Steuerkolben (9) bewegungsübertragend verbundenes Widerlager (12') im Gehäuseteil (15') an einer Verdrehsicherung (29) geführt ist und den Positionsmelder (M) über einen in seiner Wirklänge verstellbaren Stößel (18') mit der Form einer Verstellschraube (30) beaufschlagt.

9. Sitzventil nach Anspruch 1, **dadurch gekennzeichnet, dass** der Schaltpunkt des Positionsmelders (M) eingestellt ist auf einen Referenzdruck, der über den Einstellbereich des zu regelnden Drucks um eine zumindest in etwa gleichbleibende Differenz von jeweils eingestellten Wert des geregelten Drucks abweicht.

## Claims

1. Seat valve (V) for regulating a pressure to an adjustable value, comprising a housing (1, 1'), a valve seat (5) between a first chamber (2) containing a not regulated pressure and a second chamber (3) containing said regulated pressure, a valve member (6) being movable in said first chamber (2) from a leakage-free closing position relative to said valve seat (5) in an opening direction, and a control member movably provided in said second chamber (3) in a sealed fashion for actuation by an adjustable regulating force (K) directed in opening direction of said valve member (6), said control member being provided to engage via a transmission member (11) through said valve seat (5) at said valve member (6), and a position detector (M) for generating an electric signal at a switching point when at least a predetermined proportion is reached between the regulated pressure and the adjusted value of the regulated pressure, **characterised in that** the control member (1) is a regulating piston (9) which is displaceable by the regulated pressure in the second chamber (3) counter to the regulating force (K), that the regulating piston (9) is connected by a mechanic coupling (C) in force transmitting fashion with said position detector (M), and that the switching point of the position detector (M) is adjusted to the position of the regulating piston (9), which position is independent from the regulating force (K), and which position the regulating piston (9) always will achieve within the adjustment range of the regulating force (K)as soon as said predetermined proportion is reached.

2. Seat valve as in claim 1, **characterised in that** the position detector (M) is an electric switch (S), preferably a micro-switch.

3. Seat valve as in claim 1, **characterised in that** the regulating piston (9) is situated within a sleeve (8) inserted into the second chamber (3), that the sleeve protrudes into a pressure-free cavity (14), and that the regulating force (K) is acting on the regulating piston (9) in the cavity (14).

4. Seat valve as in claim 1, **characterised in that** the regulating force (K) is generated by an adjustable proportional solenoid (G).

5. Seat valve as in claim 1, **characterised in that** the regulating force (K) is transmitted to the regulating piston (9) via a counter fort (12,12'), and that the mechanic coupling (C) is coupled for movement transmission to the counter fort (12,12').

6. Seat valve as in claim 3, **characterised in that** the mechanic coupling (C) is provided with a plunger (18, 18') which is displaceable parallel to the regulating piston (9), that the plunger is aligned with an actuating element (17) of the position detector (M), and that the plunger (18) has an engagement part (19) into which a sidewardly arranged coupling part (20) of the counter fort (12) engages.

7. Seat valve as in claim 1 **characterised in that** the position detector (M) is mounted in adjustable fashion at an outer side of the housing.

8. Seat valve as in claim 1, **characterised in that** both the position detector (M) and the coupling (C) are mounted in a housing part (15') arranged on top of the housing (1), and that a counter fort (12'), which is connected for movement transmission with the regulating piston (9), is guided in the housing part (15) at an anti-rotation means (29) and is actuating the position detector (M) by means of a plunger (18') formed as an adjustment screw (30) the acting length of which is adjustable.

9. Seat valve as in claim 1, **characterised in that** the switching point of the position detector (M) is adjusted to a reference pressure which deviates within the adjustment range of the pressure which is to be regulated by an at least substantially constant difference from the initially adjusted value of the regulated pressure.

## Revendications

1. Vanne à siège (V) pour réguler une pression sur une valeur réglable, comportant un corps (1, 1'), un siège de vanne (5) entre une première chambre (2) soumise à une pression non régulée et une deuxième chambre (3) soumise à la pression régulée, un organe obturateur (6) mobile depuis une position de fermeture étanche dans le sens d'ouverture par rapport au siège de vanne (5), et un organe de commande disposé de manière mobile et étanche dans la deuxième chambre (3), soumis, contre la pression régulée, à une force de régulation (K) réglable, orientée dans le sens d'ouverture de l'organe de fermeture (6) qui via un organe de transmission (11) peut être amené en prise sur l'organe obturateur (6) à travers le siège de vanne (5), et un transmetteur de position (M) par lequel, lorsque est atteinte au moins une proportion donnée entre la pression régulée et la valeur réglée de la pression régulée, un signal électrique est produit à un point de commutation, **caractérisée en ce que** l'organe de commande (1) dans la deuxième chambre (3) est un piston de commande (9) pouvant être déplacé directement par la pression régulée contre la force de régulation (K), que, par un couplage mécanique (C), le piston de commande (9) est relié pour transmission mécanique au transmetteur de position (M), et que le point de commutation du transmetteur de position (M) est réglé sur la position du piston de commande (9) indépendante de la force de régulation (K), que le piston de commande (9) adopte toujours à l'intérieur de la plage de réglage de la force de régulation (K) lorsque la proportion prédéfinie est atteinte.

2. Vanne à siège selon la revendication 1, **caractérisée en ce que** le transmetteur de position (M) est un commutateur électrique (S), de préférence un micro-commutateur.

3. Vanne à siège selon la revendication 1, **caractérisée en ce que** le piston de commande (9) est disposé dans une douille (8) insérée dans la deuxième chambre (3), qui pénètre dans un espace (14) de détente de pression dans lequel la force de régulation (K) agit sur Le piston de commande (9).

4. Vanne à siège selon la revendication 1, **caractérisée en ce qu'**un aimant proportionnel réglable (G) génère la force de régulation (K).

5. Vanne à siège selon la revendication 1, **caractérisée en ce que** la force de régulation (K) est transmise au piston de commande (9) par l'intermédiaire d'une butée (12, 12'), et que le couplage mécanique (C) est couplé à la butée (12, 12') pour transmission mécanique.

6. Vanne à siège selon la revendication 3, **caractérisée en ce que** le couplage mécanique (C) présente un coulisseau (18, 18') capable de coulisser parallèlement au piston de commande (9), qui est orienté sur un élément d'actionnement (17) du transmetteur de position (M), et que le coulisseau (18) présente une pièce de prise (19), dans laquelle vient en prise une pièce d'accouplement (20) latérale de la butée (12).

7. Vanne à siège selon la revendication 1, **caractérisée en ce que** le transmetteur de position (M) est monté réglable sur un côté extérieur de corps.

8. Vanne à siège selon la revendication 1, **caractérisée en ce que** le transmetteur de position (M) et le couplage (C) sont montés dans une partie de corps (15') disposée en haut sur le corps (1), et qu'une butée (12') reliée au piston de commande (9) pour transmission mécanique est guidée dans la partie de corps (15') sur un arrêt de rotation (29) et agit sur le transmetteur de position (M) via un coulisseau (18') réglable dans sa longueur active présentant la forme d'une vis de réglage (30).

9. Vanne à siège selon la revendication 1, **caractérisée en ce que** le point de commutation du transmetteur de position (M) est réglé sur une pression de référence, qui, sur toute la plage de réglage de la pression à réguler, diffère de la valeur réglée particulière de la pression régulée d'une différence demeurant au moins sensiblement identique.
